# EUROPEAN PATENT SPECIFICATION

(11) **EP 0 852 188 B1**
(45) Date of publication and mention of the grant of the patent: **31.03.2004**
(21) Application number: 98300026.6
(22) Date of filing: 05.01.1998
(51) Int. Cl.: B60G 15/14, F16F 9/084, F16F 9/04

(54) **Side load compensating airspring for a vehicle suspension and method**
Querkraftkompensierende Luftfeder für eine Fahrzeugaufhängung und Verfahren
Ressort pneumatique à compensation des forces latérales pour une suspension de véhicule et méthode

(30) Priority: 06.01.1997 US 779875; 26.11.1997 US 979004
(43) Date of publication of application: 08.07.1998
(73) Proprietor: THE GATES CORPORATION, Denver, Colorado 80209 (US)
(72) Inventor: Crabtree, Michael L., Arvada, Colorado 80003 (US); Stieg, Richard F., Boulder, Colorado 80303 (US)
(74) Representative: Carpmaels & Ransford

(56) References cited:
- EP-A- 0 395 214
- DE-A- 4 010 982
- US-A- 4 688 774
- US-A- 4 763 883
- US-A- 4 911 416
- US-A- 5 129 634

## Description

The invention generally relates to strut type suspension members for vehicles, but more particularly, the invention relates to a strut with an airspring having a sleeve with a flexible wall including a rolling lobe between telescoping members, but more particularly, the invention relates to a strut with an airspring arranged to provide side load compensation while simultaneously providing a sleeve arrangement that gives a rolling lobe an acceptable flexural life, and a method for imparting a side load force to a vehicle suspension.

A strut of a vehicle suspension is typically oriented at an angle in relation to a reciprocal movement of a suspension for a wheel. The angular arrangement of the strut introduces a bending moment or torque into the telescoping members of the strut. Should such a moment be not countered or compensated with an opposite moment, it causes telescoping members of the strut to bind and results in vehicle ride harshness and reduced life of the strut. An opposite bending moment introduced into a strut is generally referred to in the industry as "side load compensation".

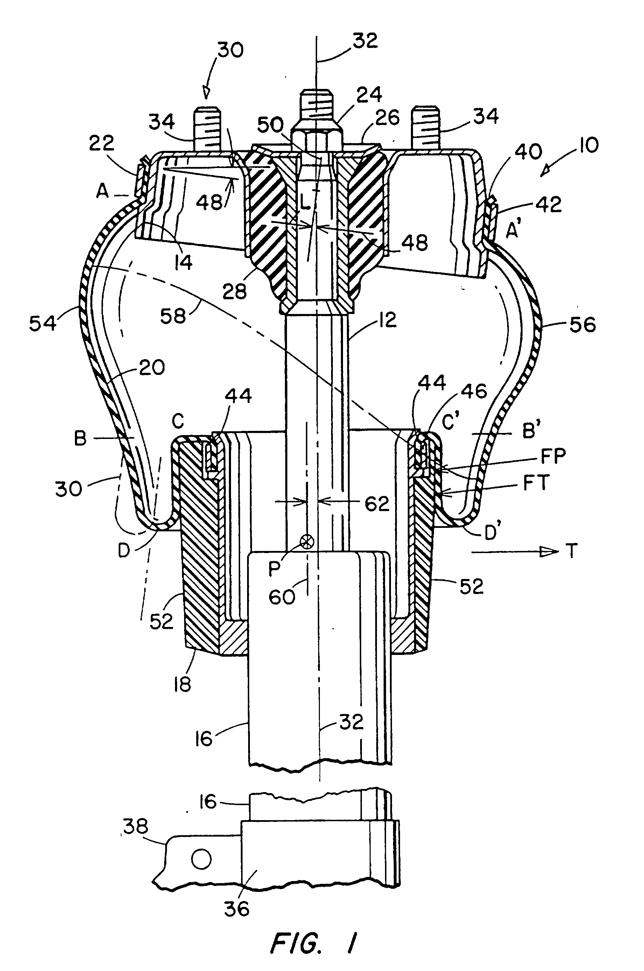

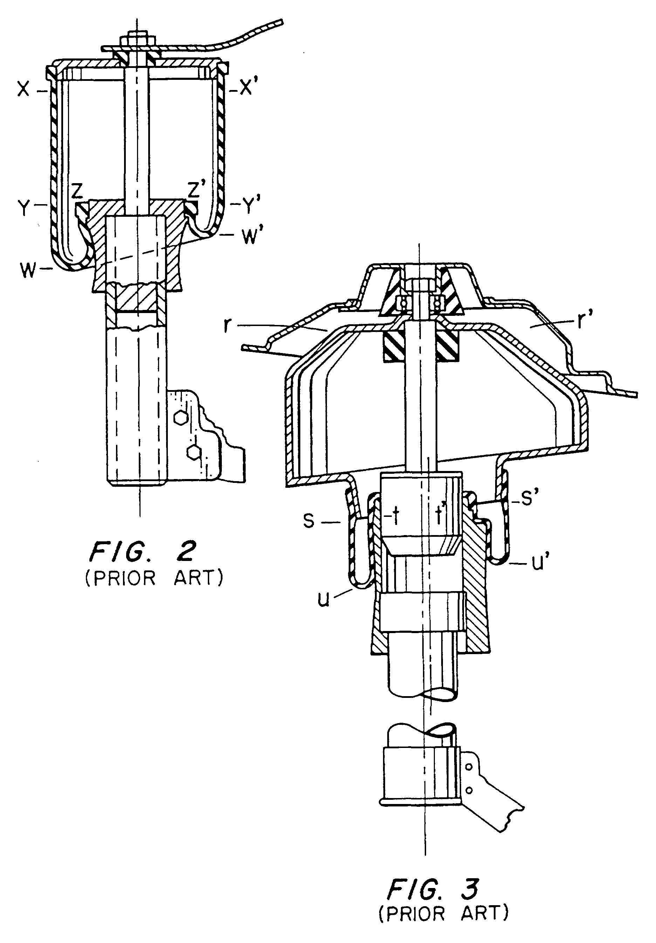

Airspring configurations have been disclosed with geometries that provide a compensating moment or side load compensation in a telescoping strut to oppose the moment placed on the strut by a vehicle suspension system. Examples of such airspring configurations for telescoping struts are disclosed in US Patent No. 4,688,774 to Warmuth, and divisional patent thereof, No. 4,911,416. The claimed feature of Warmuth '416 pertains to a tubular flexible member (airspring sleeve) with an end cut in a non-perpendicular plane and which end forms a rolling lobe of the airspring. In FIGS. 1 and 2 of Warmuth and herein exemplified by FIG. 2 the so formed rolling lobe Y-Z, Y-Z' is of unequal length W-Z, W-Z' when pressed against a rolling lobe surface of a piston of the airspring. The unequal axial length lobe results in a differential area where the force on one side of the piston (i.e. the inboard side of the strut) is greater than the force on the opposite side of the piston (i.e. the outboard side of the strut) causing some degree of side load compensation that counters a moment introduced into the strut by the suspension system. The asymmetry of unequal axial lobe length introduces a problem which is a substantially shortened flexural cycle life of the lobe (e.g. less than 100,000 cycles).

Another problem that an airspring sleeve with a non-perpendicular cut end introduces is that it defines a chamber where the surface area on the outboard side may be less than an inboard side because the sleeve length X'-W on the outboard side is less than the sleeve length X-W on the inboard side as shown in FIG. 2. The unequal sleeve lengths X'-W, X-W results in a differential surface area in the chamber portion that causes a negative side load force which is counteractive to the side load force desired from the unequal axial length rolling lobe. In FIG. 3 the length of the sleeve forming the rolling lobe portion Y-Z, Y'-Z' is less than the sleeve length that forms the chamber portion X-Y, X'-Y'. However, in FIGS. 5-7 of Warmuth '416 (and herein exemplified by FIG. 3), the chamber portion is substantially formed along length R-S, R'-S' by a metal can. That part of the sleeve length which forms the rolling lobe portion S-T, S'-T is substantially greater than that part of the sleeve which connects to the can. Consequently, there is very little sleeve length S-U available to form part of the chamber portion.

In Warmuth '774, FIGS. 5-7, an airspring with a piston eccentrically located in relation to a center line for a strut is disclosed in conjunction with a rolling lobe of unequal axial length. While the unequal length rolling lobe provides some side load compensation, the unequal length lobe is detrimental to lobe life as above discussed. In Warmuth FIG. 6, the lobe on the outboard side of the strut is greater in length than that of the lobe on the inboard side which, under Warmuth FIG. 3, imparts negative side load compensation (i.e. in the wrong direction). Also, in FIG. 6, the closure member attaching an end of the sleeve to the can is tilted clockwise while an axis of the sleeve faces toward the inboard side; a free length of the sleeve to where it bends at the rolling lobe has substantially the same projected length on both sides of the piston. Consequently, a difference in the free length of the sleeve per se on the inboard and outboard side is not available to define a differential area that may contribute to a side load compensation.

In FIG. 7 of Warmuth '774 (herein exemplified by FIG. 3), an airspring with rolling lobes of unequal axial lengths is shown. The rolling lobe length T-U against the piston on the inboard side is longer than the length T'-U' of the rolling lobe against the piston on the outboard side which, according to the teaching of Warmuth, provides side load compensation with a clockwise moment. One end of the sleeve is attached to a can that primarily forms a chamber of the airspring and where the closure member attaching and end of the sleeve to the can ring is tilted counterclockwise. The free length S-U of the sleeve to the formation of the rolling lobe on the inboard side is substantially longer than the free length S'-U' of the sleeve of the rolling lobe on the outboard side of the sleeve. The difference in length creates a surface area that is larger on the inboard side which also has a compensating moment which in this case is counterclockwise. Warmuth '774, does not consider any impact that the differential surface area has on side load compensation. The effect of differential surface area may completely offset or negate that side load compensation realized by the effect of a rolling lobe having unequal axial lengths.

Another airspring type strut with side load compensation is disclosed in US Patent No. 4,712,776 to Geno. As shown in FIG. 2 of Geno, an airspring has lobes of unequal axial lengths. The unequal length lobes have a detrimental impact on flexural life as above discussed in reference to Warmuth. In Geno, side load compensation is generated by means of a rigid member located inboard and attached to a can or canister portion that forms part of the airspring. The member restricts an outward expansion of the flexible sleeve on the inboard side. The sleeve exerts a pressure on the member which results in force on the strut to counteract lateral forces acting on the strut so as to provide a side load compensating moment. The sleeve and piston are arranged coaxially with the center line of the strut, and the canister forms a part of the operating volume for the airspring member.

US Patent No. 4,763,883 to Crabtree discloses another example of a strut at FIG. 13 where an airsleeve is oriented coaxial with the longitudinal axis of a strut. The airsleeve forms a chamber having a substantially larger diameter than that of the rolling lobe portion of the sleeve. However, Crabtree does not disclose a strut having a means for providing side load compensation.

A telescopic suspension strut, a method of providing a side load between a fixed member and a reciprocating member and a vehicle suspension according to the preambles of claims 1, 11 and 16 from respectively is known from DE-A-4 010 982.

### Summary of the Invention

In accordance with the invention, a side load compensating airspring strut is provided.

The strut has a flexible airspring sleeve with a chamber portion connected at a closure member that is tilted at an angle in relation to a longitudinal axis of the Strut. A rolling lobe portion of the airsleeve is attached to a piston that is transversely moved toward the axis of the strut, which introduces a sheer force into the chamber portion of the sleeve and increases the surface area on one side of the sleeve while decreasing a surface area on a diametrically opposed side of the sleeve. The tilted closure member, change in sleeve surface area and shear force result in a side load compensation that is imparted to the strut. The airspring has a piston with a rolling lobe surface that is eccentrically offset in an amount that tends to equalize an axial length of the rolling lobe for durability.

A method of imparting a side load force with an airspring fastened between a fixed member and reciprocating member of a vehicle suspension, is provided by tilting a closure member of the airspring, transversely moving a piston connected to a rolling lobe portion of the airspring while distorting a chamber portion of the airspring, and eccentrically offsetting the piston in a manner that tends to equalize an axial length of a rolling lobe.

An object of the invention is to provide an airspring strut having side load compensation but where the flexural life of a rolling lobe is not substantially comprised by an unequal axial length of the rolling lobe against a piston.

This and other objects or advantages of the invention will be apparent after reviewing the drawings and description thereof wherein:
Figure 1 is a partially cut-away axial cross-section of a prior art airpsring strut; and
Figure 2 is a partially cut-away axial cross-section of a prior art airspring strut; and
Figure 3 is a partially cut-away axial cross-section of a prior art airspring strut.

### Description of Preferred Embodiment

Referring to FIG. 1, a telescopic suspension strut 10 of the airspring type is provided for use with a vehicle suspension system not shown. This strut is of the type with a fixed member 12, a closure member 14 attached to the fixed member, a reciprocating member 16 that includes a hydraulic damping system (not shown), a piston 18 attached to the reciprocal member, and a flexible sleeve 20 connected between the closure member 14 and piston 18. The fixed member 12 is attached to the closure member 14 which may be in the form of a canister having any desired shape, such as a "tube-pan" shape as shown with a cylindrical surface 22 for attachment to the flexible sleeve 20. The closure member 14 attaches to the fixed member of the strut by way of a fastener 24, a washer 26, and a grommet 28. Optionally, the closure member may incorporate a bearing assembly (not shown) which permits the strut to be rotated about its longitudinal axis 32 for steering a vehicle. The closure member may be attached to a vehicle by means of threaded fasteners 34.

The reciprocating member has an end 36 that attaches at an outboard side 38 to a reciprocating part of a vehicle suspension system (not shown). The flexible sleeve is of the elastomeric type that is reinforced with embedded textile cords. The flexible member may have any desired construction but preferably, has a construction of the type as disclosed in US Patent No. 4,763,883 to Crabtree where the cords are disposed at opposite helical angles, and more preferably, where the airsleeve is contoured as taught by Crabtree.

The flexible sleeve 20 has a chamber portion A-B, A'-B' with an end 40 connected at the cylindrical surface 22 of the closure member 14 by means of a ring 42 that may be crimped or swaged so as to clamp end 40 to the closure member.

The flexible sleeve 20 has a rolling lobe portion B-C, B'-C' that is connected at an end 44 to the piston 18 by means of a ring 46 which may be crimped or swaged so as to clamp the end 44 to the piston. Preferably, the ring 46 has an axis that is concentric with the longitudinal axis 32 of the strut which helps to equalize an axial length of the rolling lobe as hereinafter set forth.

Closure member 14 is tilted at an angle 48 in relation to the longitudinal axis 32 of the strut whereby an axis 50 for the cylindrical surface 22 and connected end 40 of the sleeve is directed toward an outboard side of the strut.

Left unconstrained, the rolling lobe B-C, B'-C', would take a free position such as along dotted line 30 toward the outboard side of the strut. The piston is transversely moved and rotated about a transverse axis P from such a free position and in a direction T. The movement is resisted by the flexible member which introduces a shear force into the flexible sleeve that is reacted as a force FT against a rolling lobe surface 52 of the piston.

The tilted closure member in conjunction with the transversely moved piston distorts the chamber portion A-B by increasing its surface area 54 on an upward tilted side of the chamber portion, and distorting a diametrically opposed downward tilted side of the chamber portion A'-B' by decreasing its surface area 56 which results in a differential surface area that is larger on the outboard side of the flexible sleeve. It is theorized that the larger surface area under pressure causes a few cords of the imbedded reinforcement to have a slightly higher tension so as to pull along their length as shown by phantom line 58 so as to effectively pull against the piston generating some force FP.

Preferably, ends 40 and 44 of the flexible member are cut in a plane substantially perpendicular to the longitudinal axis of the sleeve. With such a cut and a symmetrical, co-axial rolling lobe surface, the rolling lobes would have unequal axial lengths. It has been determined that while unequal axial length lobes would provide some side load compensation, the unequal lengths are detrimental to the flexural life of the lobe. Preferably, the piston has a rolling lobe surface 52 eccentrically offset in a direction generally facing the side of the flexible sleeve with the increased surface area (i.e. outboard side) where the rolling lobe surface is offset by moving a longitudinal axis 60 of the piston an amount 62 so as to substantially equalize the axial lengths C-D, C'-D' of the rolling lobe. The ring 44 when concentric with the longitudinal axis 32 of the strut, helps in equalizing the axial length of the rolling lobe.

The number of degrees that the closure member is tilted has an impact on side load compensation. The greater the angle, the greater the side load compensation. It is preferred that the closure member be tilted at an angle from about 3 to about 20 degrees. The tilt in angle in combination with the translation of the piston member causes the flexible sleeve to distort. By empirical testing, it has been determined that the change in surface area ranges from about 1 to 15 percent as the closure member is tilted from about 3 to 20 degrees.

Generally, square cut cylindrical sleeves of the type exemplified by FIGS. 2 and 3 will not permit a tilting of the closure member beyond about 7 degrees. For this reason, flexible sleeves of the Crabtree type (US Patent No. 4,763,883) are preferred where the chamber portion may have an inside diameter that is at least from about 1.1 to about 1.5 times the maximum inside diameter of the rolling lobe portion. The increased diameter of the chamber portion permits the closure member to be tilted up to 20 degrees without the piston contacting the flexible member as the piston reciprocates into the chamber.

To illustrate the features of the invention, an airspring strut was constructed with a airsleeve having a chamber portion length of 85mm, a chamber portion diameter of 200mm, and a rolling lobe surface diameter of 150mm. The closure member was tilted at 7.0 degrees which resulted in a differential surface area between the outboard and inboard side of the sleeve of approximately 10 percent. The rolling lobe surface of the piston was eccentrically offset 4mm and arranged so that its axis was substantially parallel to the axis of the strut. The so constructed airspring, when measured empirically, exhibited a side load force of 750 Newtons (170 Ibs) when the airsleeve was pressurized to 480kpa (70psi). The airspring demonstrated a flexural life greater than 500,000 cycles.

The foregoing detail description is used for purpose of illustration only and is not intended to limit the scope of the invention which is to be determined from the appended claims.

## Claims

1. A telescopic suspension strut (10) with a fixed member (12) and a reciprocating member (16) and of the type for providing a side load compensating force, the strut with a flexible sleeve (20) having (1) a chamber portion (A-B, A'-B') connected at an end (40) to a closure member (14) that is attached to the fixed member (12) and (2) a rolling lobe portion (B-C, B'-C') connected at an end (44) to an eccentrically offset piston (18) that is attached to the reciprocating member (16), the sleeve (20) of the elastomeric type reinforced with embedded textile cords and having a length that forms the chamber portion (A-B, A'-B') that is greater than a length that forms the rolling lobe portion (B-C, B'-C'),
the chamber portion (A-B, A'-B') is connected to a closure member (14) that is tilted at an angle (48) in relation to a longitudinal axis (32) of the strut; **characterised in that**
the rolling lobe portion (B-C, B'-C') is connected to a piston (18) that is transversely moved from a free position (30) and in a direction toward the longitudinal axis (32) of the strut which (1) induces a shear force (FT) into the flexible sleeve and (2) distorts the chamber portion by increasing a surface area (54) on an upward tilted side of the chamber portion (A-B) and decreasing a surface area on a diametrically opposed, downward tilted side of the chamber portion (A'-B') resulting in a differential surface area; and
the piston (18) has a rolling lobe surface (52) eccentrically offset in a direction generally facing the side of the chamber portion of increased surface area, the rolling lobe surface offset an amount (62) that tends to equalize an axial length (C-D, C'-D') of the rolling lobe portion (B-C, B'-C') around the rolling lobe surface (52) of the piston; and
wherein, reaction to the tilted closure member (14) , differential surface area and shear force (FT) results in a side load compensation imparted to the strut (10).

2. The suspension strut as claimed in Claim 1 wherein the closure member (14) is tilted at an angle (48) from 3 to 20 degrees.

3. The suspension strut as claimed in Claim 1 wherein the surface area of the upward tilted side of the chamber portion (A-B) is from 1 to 15 percent greater than the surface area of the downward tilted side of the chamber portion (A'-B').

4. The suspension strut as claimed in Claim 1 wherein the rolling lobe surface (52) of the piston (18) is eccentrically offset (62) from 1 to 10mm.

5. The suspension strut as claimed in Claim 1 wherein the end (44) that connects the rolling lobe portion to the piston (18) is cut in a plane substantially perpendicular to a longitudinal axis of the sleeve.

6. The suspension strut as claimed in Claim 1 wherein the end (40) that connects the chamber portion (A-B, A'-B') to the closure member (14) is cut in a plane substantially perpendicular to a longitudinal axis (50) of the sleeve.

7. The suspension strut as claimed in Claim 1 where a maximum inside diameter of the chamber portion (A-B, A'-B') is at least from 1.1 to 1.5 times a maximum inside diameter of the rolling lobe portion (B-C, B'-C').

8. The suspension strut as claimed in Claim 1 wherein a longitudinal axis (60) of the piston (18) is substantially parallel to the longitudinal axis (32) of the strut.

9. The suspension strut as claimed in Claim 1 wherein the axis (60) of the piston is rotated about a transverse axis (P) an opposite angle substantially equal in degrees to the tilted angle (48) of the closure member.

10. The suspension strut as claimed in Claim 1 wherein the end (44) of the rolling lobe portion is connected to the piston with a ring (46) that is substantially concentric with the longitudinal axis (32) of the strut.

11. A method of providing a side load force between a fixed member (12) and reciprocating member (16) with an airspring of the type with a flexible sleeve (20) having (1) a chamber portion (A-B, A'-B') connected at an end (40) to a closure member (14) attached to the fixed member (12) and (2) a rolling lobe portion (B-C, B'-C') connected at an end (44) to an eccentrically offset piston (18) that is attached to the reciprocating member (16); **characterised in that** the method comprises the steps of:
tilting the closure member that is connected to the chamber portion to an angle (48); **characterised in that** the method further comprises the steps of:
transversely moving from a free position (30), a piston (18) that is connected to the rolling lobe portion (B-C, B'-C') while simultaneously distorting the chamber portion (A-B, A'-B');
eccentrically offsetting the piston (18) and attached rolling lobe portion (B-C, B'-C') while tending to equalize an axial length (C-D, C'-D') of the rolling lobe portion (B-C, B'-C') around a rolling lobe surface (52) of the piston (18); and
imparting a side load force between the fixed member (12) and reciprocating member (16) by tilting the closure member, distorting the chamber portion and eccentrically offsetting the piston.

12. The method as claimed in Claim 11 including the step of titling of the closure member (14) at an angle from 2 to 20 degrees.

13. The method as claimed in Claim 11 including the step of eccentrically offsetting (62) the rolling lobe surface (52) of the piston (18) from 1 to 10 mm.

14. The method as claimed in Claim 11 including the steps of forming the chamber portion (A-B, A'-B') to have a maximum inside diameter and forming the rolling lobe portion (B-C, B'-C') to have a maximum inside diameter such that said diameter of the chamber portion is from 1.1 to 1.5 times said maximum diameter of the rolling lobe portion.

15. The method as claimed in Claim 11 including the step of rotating the piston (18) about a transverse axis (P) an angle substantially opposite and equal in degrees to the angle that the closure member (14) is tilted.

16. A vehicle suspension with an airspring attached between a fixed member (12) reciprocating member (16), airspring with a flexible sleeve (20) having (1) a chamber portion (A-B, A'-B') connected at an end (40) to a closure member (14) that is attached to the fixed member (12) and (2) a rolling lobe portion (B-C, B'-C') connected at an end (44) to an eccentrically offset piston (18) that is attached to the reciprocating member (16), the sleeve (20) of the elastomeric type reinforced with embedded textile cords;
the chamber portion (A-B, A'-B') is connected to a closure member (14) that is tilted at an angle (48); **characterised in that** :
the rolling lobe portion (B-C, B'-C') is connected to a piston (18) that is transversely moved from a free position 30 which distorts the chamber portion (A-B, A'-B'); and
the piston (18) has a rolling lobe surface (52) eccentrically offset an amount (62) that tends to equalize an axial length (C-D, C'-D') of the rolling lobe portion (B-C, B'-C') around the rolling lobe surface (52) of the piston; and
wherein, reaction to the tilted closure member (14), distorted chamber portion and transversely moved piston, results in a side load force.

17. The vehicle suspension as claimed in Claim 16 wherein the closure member (14) is tilted at an angle (48) from 3 to 20 degrees.

18. The vehicle suspension as claimed in Claim 16 wherein the rolling lobe surface (52) of the piston is eccentrically offset (62) from 1 to 10mm.

19. The vehicle suspension as claimed in Claim 16 where a maximum inside diameter of the chamber portion (A-B, A'B') is at least from 1.1 to 1.5 times a maximum inside diameter of the rolling lobe portion (B-C, B'-C').

20. The vehicle suspension as claimed in Claim 16 wherein the piston (18) is rotated about a transverse axis (P) an opposite angle substantially equal in degrees to the tilted angle (48) of the closure member (14).

## Patentansprüche

1. Teleskopische Aufhängungsstrebe (10) mit einem festen Teil (12) und einem reziprozierenden Teil (16) und von dem Typ zum Aufbringen einer Seitenlastkompensationskraft, wobei die Strebe eine flexible Hülse (20) mit (1) einem Kammerbereich (A-B, A'-B'), der an einem Ende (40) mit einem Verschlußteil (14) verbunden ist, welches an dem festen Teil (12) angebracht ist, und (2) einem Rollkeulenbereich (B-C, B'-C') aufweist, der an einem Ende (44) mit einem exzentrisch versetzten Kolben (18) verbunden ist, der an dem reziprozierenden Teil (16) angebracht ist, wobei die elastomere Hülse (20) mit eingebetteten Textilcords verstärkt ist und eine den Kammerbereich (A-B, A'-B') bildende Länge hat, welche größer als die Länge ist, welche den Rollkeulenbereich (B-C, B'-C') bildet, wobei der Kammerbereich (A-B, A'-B') mit einem Verschlußteil (14) verbunden ist, das unter einem Winkel (48) in bezug auf eine Längsachse (32) der Strebe geneigt ist,
**dadurch gekennzeichnet, daß**
- der Rollkeulenbereich (B-C, B'-C') mit einem Kolben (18) verbunden ist, der aus einer freien Position (30) in Querrichtung und in Richtung der Längsachse (32) der Strebe bewegt wird, wodurch (1) eine Scherkraft (FT) in die flexible Hülle induziert wird und (2) der Kammerbereich verformt wird, indem die Oberfläche (54) auf der aufwärts geneigte Seite des Kammerbereichs (A-B) vergrößert wird und die Oberfläche auf der diametral gegenüberliegenden, abwärts geneigten Seite des Kammerbereichs (A'-B') verringert wird, was zu einer differentiellen Fläche führt; und
- der Kolben (18) eine Rollkeulenfläche (52) aufweist, die exzentrisch im wesentlichen zu der Seite des Kammerbereichs gewandt versetzt ist, welche eine vergrößerte Fläche aufweist, wobei die Rollkeulenfläche um einen Betrag (62) versetzt ist, der bestrebt ist, eine axiale Länge (C-D, C'-D') des Rollkeulenbereichs (B-C,B'-C') um die Rollkeulenfläche (52) des Kolbens auszugleichen; und
- wobei in Reaktion auf das geneigte Verschlußteil (14) die differentielle Fläche und die Scherkraft (FT) zu einer auf die Strebe (10) aufgebrachten Seitenlastkompensation führen.

2. Aufhängungsstrebe nach Anspruch 1, bei der das Verschlußteil (14) unter einem Winkel (48) zwischen 3 und 20 Grad geneigt ist.

3. Aufhängungsstrebe nach Anspruch 1, bei der die Fläche der aufwärts geneigten Seite des Kammerbereichs (A-B) zwischen 1 und 15 Prozent größer als die Fläche der nach unten geneigten Seite des Kammerbereichs (A'-B') ist.

4. Aufhängungsstrebe nach Anspruch 1, bei der die Rollkeulenfläche (52) des Kolbens (18) um zwischen 1 und 10 mm exzentrisch versetzt ist.

5. Aufhängungsstrebe nach Anspruch 1, bei der das Ende (44), das den Rollkeulenbereich mit dem Kolben (18) verbindet, in einer im wesentlichen senkrecht zur Längsachse der Hülse verlaufenden Ebene geschnitten ist.

6. Aufhängungsstrebe nach Anspruch 1, bei der das Ende (40), das den Kammerbereich (A-B, A'-B') mit dem Verschlußteil (14) verbindet, in einer im wesentlichen senkrecht zur Längsachse (50) der Hülse verlaufenden Ebene geschnitten ist.

7. Aufhängungsstrebe nach Anspruch 1, bei der der maximale Innendurchmesser des Kammerbereichs (A-B, A'-B') wenigstens zwischen dem 1,1-und dem 1-5-fachen des maximalen Innendurchmessers des Rollkeulenbereichs (B-C, B'-C') beträgt.

8. Aufhängungsstrebe nach Anspruch 1, bei der die Längsachse (60) des Kolbens (18) im wesentlichen parallel zur Längsachse (32) der Strebe verläuft.

9. Aufhängungsstrebe nach Anspruch 1, bei der die Achse (60) des Kolbens um eine Querachse (P) unter einem entgegengesetzten Winkel gedreht ist, dessen Gradbetrag im wesentlichen demjenigen des Neigungswinkels (48) des Verschlußteils entspricht.

10. Aufhängungsstrebe nach Anspruch 1, bei der das Ende (44) des Rollkeulenbereichs mit dem Kolben mittels eines Rings (46) verbunden ist, der im wesentlichen konzentrisch mit der Längsache (32) der Strebe ist.

11. Verfahren zum Aufbringen einer Seitenlast zwischen einem festen Teil (12) und einem reziprozierenden Teil (16) mit einer Luftfeder des Typs mit einer flexiblen Hülse (20) mit (1) einem Kammerbereich (A-B, A'-B'), der an einem Ende (40) mit einem Verschlußteil (14) verbunden ist, welches an dem festen Teil (12) angebracht ist, und (2) einem Rollkeulenbereich (B-C, B'-C'), der an einem Ende (44) mit einem exzentrisch versetzten Kolben (18) verbunden ist, der an dem reziprozierenden Teil (16) angebracht ist, wobei das Verfahren den folgenden Schritt umfaßt:
- Neigen des mit dem Kammerbereich verbundenen Verschlußteils unter einem Winkel (48);
**dadurch gekennzeichnet, daß** das Verfahren ferner die folgenden Schritte umfaßt:
- Querbewegen eines mit dem Rollkeulenbereich (B-C, B'-C') verbundenen Kolbens (18) aus einer freien Position (30), bei gleichzeitigem Verformen des Kammerbereichs (A-B, A'-B');
- exzentrisches Versetzen des Kolbens (18) und des daran angebrachten Rollkeulenbereichs (B-C, B'-C'), wobei die axiale Länge (C-D, C'-D') des Rollkeulenbereichs (B-C, B'-C') um eine Rollkeulenfläche (52) des Kolbens (18) ausgeglichen wird; und
- Aufbringen einer Seitenlast zwischen dem festen Teil (12) und dem reziprozierenden Teil (16) durch Neigen des Verschlußteils, Verformen des Kammerbereichs und exzentrisches Versetzen des Kolbens.

12. Verfahren nach Anspruch 11, mit dem Schritt des Neigens des Verschlußteils (14) unter einem Winkel zwischen 2 und 20 Grad.

13. Verfahren nach Anspruch 11, mit dem Schritt des exzentrischen Versetzens (62) der Rollkeulenfläche (62) des Kolbens (18) um 1 bis 10 mm.

14. Verfahren nach Anspruch 11, mit den Schritten des Bildens des Kammerbereichs (A-B, A'-B') mit einem maximalen Innendurchmesser und des Bildens des Rollkeulenbereichs (B-C, B'-C') mit einem maximalen Innendurchmesser, derart daß der Durchmesser des Kammerbereichs das 1,1- bis 1,5-fache des maximalen Durchmessers des Rollkeulenbereichs beträgt.

15. Verfahren nach Anspruch 11, mit dem Schritt des Drehens des Kolbens (18) um eine Querachse (P) um einen Winkel, der dem Neigungswinkel des Verschlußteils (14) im wesentlichen entgegengesetzt und im Gradbetrag gleich ist.

16. Fahrzeugaufhängung mit einer Luftfeder, die zwischen einem festen Teil (12) und einem reziprozierenden Teil (16) angebracht ist, wobei die Luftfeder eine flexible Hülse (20) mit (1) einem Kammerbereich (A-B, A'-B'), der an einem Ende (40) mit einem Verschlußteil (14) verbunden ist, welches an dem festen Teil (12) angebracht ist, und (2) einem Rollkeulenbereich (B-C, B'-C') aufweist, deran einem Ende (44) mit einem exzentrisch versetzten Kolben (18) verbunden ist, der an dem reziprozierenden Teil (16) angebracht ist, wobei die elastomere Hülse (20) mit eingebetteten Textilcords verstärkt ist, wobei der Kammerbereich (A-B, A'-B') mit einem Verschlußteil (14) verbunden ist, der unter einem Winkel (48) geneigt ist,
**dadurch gekennzeichnet, daß**
- der Rollkeulenbereich (B-C, B'-C') mit einem Kolben (18) verbunden ist, der aus einer freien Position (30) in Querrichtung bewegt wird, wodurch der Kammerbereich (A-B, A'-B') verformt wird; und
- der Kolben (18) eine Rollkeulenfläche (52) aufweist, die exzentrisch um einen Betrag (62) versetzt ist, der bestrebt ist, eine axiale Länge (C-D, C'-D') des Rollkeulenbereichs (B-C,B'-C') um die Rollkeulenfläche (52) des Kolbens auszugleichen; und
- wobei in Reaktion auf das geneigte Verschlußteil (14) der verformte Kammerbereich und der quer bewegte Kolben zu einer Seitenlast führen.

17. Fahrzeugaufhängung nach Anspruch 16, bei der das Verschlußteil (14) unter einem Winkel (48) zwischen 3 und 20 Grad geneigt ist.

18. Fahrzeugaufhängung nach Anspruch 16, bei der die Rollkeulenfläche (52) des Kolbens um zwischen 1 und 10 mm exzentrisch versetzt (62) ist.

19. Fahrzeugaufhängung nach Anspruch 16, bei der der maximale Innendurchmesser des Kammerbereichs (A-B, A'-B') wenigstens zwischen dem 1,1- und dem 1-5-fachen des maximalen Innendurchmessers des Rollkeulenbereichs (B-C, B'-C') beträgt.

20. Fahrzeugaufhängung nach Anspruch 16, bei der der Kolben um eine Querachse (P) unter einem entgegengesetzten Winkel gedreht ist, dessen Gradbetrag im wesentlichen demjenigen des Neigungswinkels (48) des Verschlußteils (14) entspricht.

## Revendications

1. Bras (10) de suspension télescopique pourvu d'un élément fixe (12) et d'un élément mobile à va-et-vient (16), et du type destiné à fournir une force de compensation de charge latérale, le bras pourvu d'un manchon souple (20) comportant (1) une partie (A-B, A'-B') de chambre reliée, au niveau d'une extrémité (40) à un élément (14) de fermeture qui est assujetti à l'élément fixe (12) et (2) une partie (B-C, B'-C') de lobe de roulement reliée au niveau d'une extrémité (44) à un piston décalé de manière excentrée (18) qui est relié à l'élément mobile à va-et-vient (16), le manchon (20) étant du type élastomère armé de cordes de textile intégrées et ayant une longueur qui forme la partie (A-B, A'-B') de chambre supérieure à une longueur qui forme la partie (B-C, B'-C') de lobe de roulement,
**caractérisé en ce que**
la partie (A-B, A'-B') de chambre est reliée à un élément (14) de fermeture qui est incliné d'un angle (48) par rapport à un axe longitudinal (32) du bras ;
**caractérisé en ce que**
la partie (B-C, B'-C') de lobe de roulement est reliée à un piston (18) qui est déplacé transversalement par rapport à une position libre (30) et dans un sens vers l'axe longitudinal (32) du bras qui (1) induit une force (FT) de cisaillement dans le manchon souple et (2) déforme la partie de chambre en augmentant une superficie (54) sur un côté incliné vers le haut de la partie (A-B) de chambre et en diminuant une superficie sur un côté incliné vers le bas diamétralement opposé de la partie (A'-B') de chambre, en donnant une superficie différentielle ; et
le piston (18) comporte une surface (52) de lobe de roulement décalée de manière excentrée dans une direction faisant globalement face au côté de la partie de chambre à superficie augmentée, la surface de lobe de roulement étant décalée d'une quantité (62) qui tend à égaler une longueur axiale (C-D, C'-D') de la partie (B-C, B'-C') de lobe de roulement autour de la surface (52) de lobe de roulement du piston ; et
dans lequel une réaction à l'élément incliné (14) de fermeture, à la superficie différentielle et à la force (FT) de cisaillement donne une compensation de charge latérale communiquée au bras (10).

2. Bras de suspension selon la revendication 1, dans lequel l'élément (14) de fermeture est incliné d'un angle (48) de 3 à 20 degrés.

3. Bras de suspension selon la revendication 1, dans lequel la superficie du côté incliné vers le haut de la partie (A-B) de chambre est de 1 à 15 pour-cent supérieure à la superficie du côté incliné vers le bas de la partie (A'-B') de chambre.

4. Bras de suspension selon la revendication 1, dans lequel la surface (52) de lobe de roulement du piston (18) est décalée de manière excentrée (62) de 1 à 10 mm.

5. Bras de suspension selon la revendication 1, dans lequel l'extrémité (44) qui relie la partie de lobe de roulement et le piston (18) est coupée dans un plan sensiblement perpendiculaire à l'axe longitudinal du manchon.

6. Bras de suspension selon la revendication 1, dans lequel l'extrémité (40) qui relie la partie (A-B, A'-B') de chambre et l'élément (14) de fermeture est coupée dans un plan sensiblement perpendiculaire à l'axe longitudinal (50) du manchon.

7. Bras de suspension selon la revendication 1, dans lequel un diamètre intérieur maximal de la partie (A-B, A'-B') de chambre correspond au moins à 1,1 à 1,5 fois un diamètre intérieur maximal de la partie (B-C, B'-C') de lobe de roulement.

8. Bras de suspension selon la revendication 1, dans lequel un axe longitudinal (60) du piston (18) est sensiblement parallèle à l'axe longitudinal (32) du bras.

9. Bras de suspension selon la revendication 1, dans lequel l'axe (60) du piston tourne autour d'un axe transversal (P) d'un angle opposé sensiblement égal, en degrés, à l'angle d'inclinaison (48) de l'élément de fermeture.

10. Bras de suspension selon la revendication 1, dans lequel l'extrémité (44) de la partie de lobe de roulement est reliée au piston par une bague (46) qui est sensiblement concentrique à l'axe longitudinal (32) du bras.

11. Procédé pour établir une force de charge latérale entre un élément fixe (12) et un élément mobile à va-et-vient (16) à l'aide d'un ressort pneumatique du type équipé d'un manchon souple (20) comportant (1) une partie (A-B, A'-B') de chambre reliée au niveau d'une extrémité (40) à un élément (14) de fermeture qui est assujetti à l'élément fixe (12) et (2) une partie (B-C, B'-C') de lobe de roulement reliée au niveau d'une extrémité (44) à un piston décalé de manière excentrée (18) qui est relié à l'élément mobile à va-et-vient (16) ; **caractérisé en ce que** le procédé comprend les étapes :
d'inclinaison, d'un angle (48), de l'élément de fermeture qui est relié à la partie de chambre ; **caractérisé en ce que** le procédé comprend en outre les étapes :
de déplacement transversalement par rapport à une position libre (30), d'un piston (18) qui est relié à la partie (B-C, B'-C') de lobe de roulement tout en déformant simultanément la partie (A-B, A'-B') de chambre ;
de décalage de manière excentrée du piston (18) et de la partie (B-C, B'-C') de lobe de roulement assujettie tout en tendant à égaler une longueur axiale (C-D, C'-D') de la partie (B-C, B'-C') de lobe de roulement autour d'une surface (52) de lobe de roulement du piston (18) ; et
de communication d'une force de charge latérale entre l'élément fixe (12) et l'élément mobile à va-et-vient (16) par inclinaison de l'élément de fermeture, par déformation de la partie de chambre et par décalage de manière excentrée du piston.

12. Procédé selon la revendication 11, incluant l'étape d'inclinaison de l'élément (14) de fermeture d'un angle de 2 à 20 degrés.

13. Procédé selon la revendication 11, incluant l'étape de décalage de manière excentrée (62), de 1 à 10 mm, de la surface (52) de lobe de roulement du piston (18).

14. Procédé selon la revendication 11, incluant les étapes de formation de la partie (A-B, A'-B') de chambre pour qu'elle ait un diamètre intérieur maximal et de formation de la partie (B-C, B'-C') de lobe de roulement pour qu'elle ait un diamètre intérieur maximal de sorte que ledit diamètre de la partie de chambre correspond à 1,1 à 1,5 fois ledit diamètre maximal de la partie de lobe de roulement.

15. Procédé selon la revendication 11, incluant l'étape de rotation du piston (18) autour d'un axe transversal (P) d'un angle sensiblement opposé et égal, en degrés, à l'angle d'inclinaison de l'élément (14) de fermeture.

16. Suspension de véhicule équipée d'un ressort pneumatique assujetti entre un élément fixe (12) et un élément mobile à va-et-vient (16), le ressort pneumatique étant pourvu d'un manchon souple (20) comportant (1) une partie (A-B, A'-B') de chambre reliée au niveau d'une extrémité (40) à un élément (14) de fermeture qui est assujetti à l'élément fixe (12), et (2) une partie (B-C, B'-C') de lobe de roulement reliée au niveau d'une extrémité (44) à un piston décalé de manière excentrée (18) qui est relié à l'élément mobile à va-et-vient (16), le manchon (20) étant du type élastomère armé de cordes de textile intégrées ;
**caractérisée en ce que** :
la partie (A-B, A'-B') de chambre est reliée à un élément (14) de fermeture qui est incliné d'un angle (48) ;
**caractérisé en ce que**
la partie (B-C, B'-C') de lobe de roulement est reliée à un piston (18) qui est déplacé transversalement par rapport à une position libre (30) qui déforme la partie (A-B, A'-B') de chambre ; et
le piston (18) comporte une surface (52) de lobe de roulement décalée de manière excentrée d'une quantité (62) qui tend à égaler une longueur axiale (C-D, C'-D') de la partie (B-C, B'-C') de lobe de roulement autour de la surface (52) de lobe de roulement du piston ; et
dans laquelle une réaction à l'élément (14) de fermeture incliné, à la partie de chambre déformée et au piston déplacé transversalement, donne une force de charge latérale.

17. Suspension de véhicule selon la revendication 16, dans laquelle l'élément (14) de fermeture est incliné d'un angle (48) de 3 à 20 degrés.

18. Suspension de véhicule selon la revendication 16, dans laquelle la surface (52) de lobe de roulement du piston est décalée de manière excentrée (62) de 1 à 10 mm.

19. Suspension de véhicule selon la revendication 16, dans laquelle un diamètre intérieur maximal de la partie (A-B, A'-B') de chambre correspond au moins à 1,1 à 1,5 fois un diamètre intérieur maximal de la partie (B-C, B'-C') de lobe de roulement.

20. Suspension de véhicule selon la revendication 16, dans laquelle le piston (18) tourne autour d'un axe transversal (P) d'un angle opposé sensiblement égal, en degrés, à l'angle d'inclinaison (48) de l'élément (14) de fermeture.
